# EUROPÄISCHE PATENTSCHRIFT

(11) **EP 1 518 123 B1**
(45) Veröffentlichungstag und Bekanntmachung des Hinweises auf die Patenterteilung: **29.10.2008**
(21) Anmeldenummer: 03740302.9
(22) Anmeldetag: 23.06.2003
(51) Int. Cl.: G01N 33/543, G01N 27/416, G01N 27/49

(54) **VORRICHTUNG UND VERFAHREN ZUM ELEKTROCHEMISCHEN NACHWEIS**
ELECTROCHEMICAL DETECTION METHOD AND DEVICE
DISPOSITIF ET PROCEDE DE DETECTION ELECTROCHIMIQUE

(30) Priorität: 28.06.2002 DE 10229210; 29.06.2002 DE 10229374
(43) Veröffentlichungstag der Anmeldung: 30.03.2005
(73) Patentinhaber: November Aktiengesellschaft Gesellschaft für Molekulare Medizin, 91052 Erlangen (DE)
(72) Erfinder: SCHÜLEIN, Jürgen, 91080 Spardorf (DE); GRASSL, Björn, 90415 Nürnberg (DE); HASSMANN, Jörg, 91052 Erlangen (DE)
(74) Vertreter: UEXKÜLL & STOLBERG
(86) Internationale Anmeldenummer: PCT/EP2003/006566
(87) Internationale Veröffentlichungsnummer: WO 2004/003556

(56) Entgegenhaltungen:
- US-A- 4 315 753
- US-A- 4 655 880
- US-A- 5 149 629
- US-A- 5 217 112
- US-A1- 2001 029 048

## Beschreibung

Die Erfindung betrifft eine Vorrichtung und ein Verfahren zum elektrochemischen Nachweis zumindest eines in einer Flüssigkeit enthaltenen biochemischen Moleküls aus einer Gruppe vorgegebener biochemischer Moleküle. Die Erfindung betrifft insbesondere eine Vorrichtung zum Nachweis von Krankheitserregern in einer Körperflüssigkeit, z. B. Blut.

Zur Messung elektrochemischer P-otenziale werden nach dem Stand der Technik Potentiostaten mit zwei oder mehreren Arbeitselektroden verwendet. Potentiostaten mit mehreren Arbeitselektroden werden auch als Multipotentiostaten bezeichnet. Solche Multipotentiostaten weisen eine Referenzelektrode, eine Gegenelektrode und mehrere Arbeitselektroden auf. Die Spannung zwischen einer Arbeitselektrode und der Referenzelektrode wird über die zwischen der Gegenelektrode und der jeweiligen Arbeitselektrode anliegende Spannung geregelt. Ein vorgegebener Spannungsverlauf zwischen jeder der Arbeitselektroden und der Referenzelektrode wird für jede Arbeitselektrode separat erzeugt.

Aus der US 5,830,343 ist ein Verfahren bekannt, bei dem mittels eines Multipotentiostaten simultan die über eine Vielzahl von Arbeitselektroden abfallende Spannung gemessen werden kann. Dabei wird jede Arbeitselektrode unabhängig von den anderen mit einem besonderen vorgegebenen Potenzial gegen die Referenzelektrode beaufschlagt. Infolgedessen bilden sich während der Messung zwischen den Arbeitselektroden Potenziale aus. Das macht die Auswertung der an den übrigen Arbeitselektroden gemessenen Ströme kompliziert.

Aus der US 5,149,629 ist ein Verfahren zur elektrochemischen Detektion von in einer Lösung enthaltenen Molekülen bekannt, bei dem sequenziell mit mehreren Arbeitselektroden gemessen wird. Die Durchführung einer solchen Messung ist zeitaufwändig.

Die US 4,315,753 beschreibt ein Verfahren und eine Vorrichtung zur gleichzeitigen Ermittlung der Konzentration zweiter sauerstoffhaltiger Gase. Die Vorrichtung weist einen Potentiostaten mit zwei Stromfolgern auf, die zur Erzeugung eines Differenzsignals miteinander verschalten sind. Mit der bekannten Vorrichtung ist es nicht möglich, mehrere in einer Lösung enthaltene biochemische Moleküle spezifisch nachzuweisen.

Die US 4,655,880 offenbart eine Vorrichtung zum Nachweis von Glucose. Dabei werden zwei Arbeitselektroden verwendet, von denen eine mit dem Glucose-Oxidase-Enzym beschichtet ist. Die andere Arbeitselektrode ist unbeschichtet und dient der Messung des Untergrunds. Eine simultane Messung unterschiedlicher biochemischer Moleküle ist mit der bekannten Vorrichtung nicht möglich.

Aus Paeschke, Manfred et al.: Voltammetric Multichannel Measurements Using Silicon Fabricated Microelectrode Arrays; in: Electroanalysis 1996, 8, Nr. 10; Seiten 891 bis 898 ist ein voltammetrisches Verfahren unter Verwendung eines Vielkanalpotentiostaten beschrieben. Der beschriebene Vielkanalpotentiostat ist aufwändig herzustellen. Abgesehen davon, ergeben sich in der Praxis bei der Messung häufig Stabilitätsprobleme. Ein spezifischer Nachweis von in einer Lösung enthaltenen biochemischen Molekülen ist damit nur eingeschränkt möglich.

Die DE 41 36 779 A1 beschreibt eine Vorrichtung zum simultanen Nachweis verschiedener Gaskomponenten. Die Vorrichtung umfasst verschiedene Arbeitselektroden, eine gemeinsame Gegenelektrode sowie eine gemeinsame Referenzelektrode. Mit der Vorrichtung kann das Potenzial jeder Arbeitselektrode separat geregelt werden. Die entsprechende Regelungsschaltung ist kompliziert und störanfällig.

Aus der DE 100 15 818 A1 ist ein Biosensor bekannt. Zum Nachweis eines in einer Lösung enthaltenen Analyten wird dessen Oxidations- und Reduktionspotential an jeweils einer Elektrode gemessen. Es sind also zwei Elektroden pro nachzuweisendem Analyt notwendig. Der vorgeschlagene Biosensor ist relativ aufwändig herzustellen. Ein gleichzeitiger Nachweis mehrerer in einer Flüssigkeit enthaltener biochemischer Moleküle ist damit nicht möglich.

Die US 2001/0029048 A1 offenbart eine Vorrichtung zum simultanen elektrochemischen Nachweis von in einer Flüssigkeit enthaltenen biochemischen Molekülen mit einem eine Referenzelektrode, eine Gegenelektrode sowie eine Vielzahl von Arbeitselektroden aufweisenden Mittel zur Aufnahme der Flüssigkeit.

Aufgabe der Erfindung ist es, die Nachteile nach dem Stand der Technik zu beseitigen. Es sollen insbesondere eine Vorrichtung und ein Verfahren angegeben werden, mit denen ein simultaner elektrochemischer Nachweis von in einer Flüssigkeit enthaltenen unterschiedlichen biochemischen Molekülen einfach, kostengünstig und schnell durchführbar ist. Nach einem weiteren Ziel der Erfindung sollen möglichst genaue Messergebnisse erzielbar sein.

Diese Aufgabe wird durch die Merkmale der Ansprüche 1 und 12 gelöst. Zweckmäßige Ausgestaltungen ergeben sich aus den Merkmalen der Ansprüche 2 bis 11, 13 und 14.

Nach Maßgabe der Erfindung ist eine Vorrichtung zum elektrochemischen Nachweis eines in einer Flüssigkeit enthaltenen biochemischen Moleküls aus einer Gruppe vorgegebener biochemischer Moleküle unterschiedlicher Art vorgesehen mit
einem mindestens eine Referenz- und mindestens eine Gegenelektrode sowie mehr als zwei Arbeitselektroden aufweisenden Mittel zur Aufnahme der Flüssigkeit, wobei zum Nachweis jeder Art eines biochemischen Moleküls zumindest jeweils eine Arbeitselektrode (AE1, AE2, AE3) vorgesehen ist, die mit einem zum nachzuweisenden biochemischen Molekül komplementären Molekül beschichtet ist, so dass biochemische Moleküle unterschiedlicher Art simultan nachweisbar sind,
einem Potentiostaten zur Erzeugung eines vorgegebenen während der Messung veränderlichen Spannungsverlaufs zwischen den Arbeitselektroden und der Referenzelektrode,
wobei jeder der Arbeitselektroden ein Strom-Spannungskonverter nachgeschaltet ist, wobei die Strom-Spannungskonverter sämtliche Arbeitselektroden auf demselben Potenzial halten und
einem Mittel zum Messen der durch die Arbeitselektroden fließenden Ströme.

Die vorgeschlagene Vorrichtung ist einfach aufgebaut. Sie ermöglicht einen schnellen Nachweis zumindest eines in einer Körperflüssigkeit enthaltenen biochemischen Moleküls, z. B. eines Krankheitserregers. Die Vorrichtung lässt sich einfach durch die Wahl einer geeigneten Beschichtung der Arbeitselektrode an die nachzuweisenden biochemischen Moleküle anpassen. Die Art und die Anzahl der in der "Gruppe" enthaltenen biochemischen Moleküle ist durch die Anzahl der mit unterschiedlichen komplementären biochemischen Molekülen beschichteten Arbeitselektroden gegeben. Die Vorrichtung ermöglicht auch einen simultanen elektrochemischen Nachweis mehrerer unterschiedlicher in der Flüssigkeit enthaltener biochemischer Moleküle. Zum simultanen Nachweis unterschiedlicher nachzuweisender biochemischer Moleküle ist lediglich ein einziger Potentiostat erforderlich. Damit wird an sämtliche Arbeitselektroden gleichzeitig ein identischer vorgegebener Spannungsverlauf angelegt. Indem sämtliche Arbeitselektroden auf demselben Potenzial gehalten werden, ist es möglich, die durch die Arbeitselektroden fließenden Ströme parallel zu messen. Dazu kann jede der Arbeitselektroden über einen Stromfolger zur individuellen Auswertung der Signale virtuell an der Schaltungsmasse anliegen. Zum spezifischen Nachweis der in der Flüssigkeit enthaltenen biochemischen Moleküle sind die Arbeitselektroden mit zum nachzuweisenden biochemischen Molekül komplementären biochemischen Molekülen beschichtet. Die Arbeitselektroden sind spezifisch für die nachzuweisenden biochemischen Molekülen. Für jedes nachzuweisende biochemische Molekül ist zumindest eine spezifische Arbeitselektrode vorgesehen. Die komplementären biochemischen Moleküle binden spezifisch an den nachzuweisenden biochemischen Moleküle. Infolge der Ausbildung einer aus dem nachzuweisenden biochemischen Molekül und dem komplementären biochemischen Molekül gebildeten Verbindung ändert sich das elektrochemische Signal der Arbeitselektrode.

Nach einer vorteilhaften Ausgestaltung sind mehrere miteinander verbundene oder kapazitiv gekoppelte Referenzelektroden vorgesehen. Damit kann die Geschwindigkeit der Messung weiter erhöht werden. In diesem Zusammenhang können auch mehrere miteinander verbundene Gegenelektroden vorgesehen sein.

Zweckmäßigerweise weist das Mittel zum Messen einen Analog-Digital-Wandler auf. Ferner kann ein Multiplexer vorgesehen sein, so dass eine quasi zeitgleiche bzw. simultane Messung der durch die Arbeitselektroden fließenden Ströme möglich ist.

Nach einer weiteren Ausgestaltung ist der Strom-Spannungskonverter ein einen ersten Operationsverstärker aufweisender Stromfolger, wobei ein nichtinvertierender Eingang des Operationsverstärkers an der Masse anliegt und dessen invertierender Eingang über einen ersten Widerstand mit dem Ausgang des ersten Operationsverstärkers und mit der Arbeitselektrode verbunden ist. Parallel zum ersten Widerstand kann eine Kapazität geschaltet sein. Damit kann auf einfache Weise ein Rauschen unterdrücktund somit die Sensitivität gesteigert werden.
Zur Einstellung des Strommessbereichs können unterschiedlich große erste Widerstände zwischen dem invertierenden Eingang und dem Ausgang des ersten Operationsverstärkers einschaltbar sein. Damit kann in einfacher Weise der Strommessbereich variiert werden. Der Strommessbereich kann für jede Arbeitselektrode individuell auf den für das nachzuweisende biochemische Molekül optimalen Bereich eingestellt werden. Die Vorrichtung ist universell für den Nachweis unterschiedlichster biochemischer Moleküle geeignet.

Beim nachzuweisenden biochemischen Molekül kann es sich um eine Nukleinsäure und beim komplementären biochemischen Molekül um zur nachzuweisenden Nukleinsäure komplementäre Nukleinsäuren handeln. Im Falle einer Hybridisierung solcher Nukleinsäuren ändert sich der Stromverlauf durch die entsprechende Arbeitselektrode. Eine solche Änderung zeigt an, dass in der Lösung eine Nukleinsäure enthalten ist, welche zur an der Arbeitselektrode gebundenen Nukleinsäure komplementär ist. Ein solcher Nachweis ist hoch sensitiv und äußerst spezifisch. Bei den biochemischen Molekülen kann es sich auch um synthetische einzelsträngige Nukleinsäuren oder deren natürliche und/oder synthetische Analoga, Antigene, Proteine, wie Antikörper, Antikörperfragmente, Derivate von Antikörpern oder Antikörperfragmenten, Nukleinsäure-bindende Proteine, Rezeptoren oder Liganden handeln.

In weiterer Ausgestaltung weist der Potentiostat einen als Spannungsfolger geschalteten zweiten Operationsverstärker auf, an dessen nicht invertierendem Eingang die Referenzelektrode angeschlossen ist. Der Potentiostat kann ferner einen dritten Operationsverstärker aufweisen, an dessen Ausgang die Gegenelektrode angeschlossen ist, dessen invertierender Eingang über einen zweiten Widerstand mit dem Ausgang des zweiten Operationsverstärkers verbunden und über einen dritten Widerstand mit einer Einrichtung zur Erzeugung einer wählbaren Sollspannung angeschlossen ist, und wobei der nichtinvertierende Eingang des dritten Operationsverstärkers an der Masse anliegt. Des Weiteren kann zwischen dem Ausgang des dritten Operationsverstärkers und dessen invertierenden Eingang eine Kapazität eingeschaltet sein. Das bewirkt eine Stabilisierung der Regelung.

Nach weiterer Maßgabe der Erfindung ist ein Verfahren zum elektrochemischen Nachweis zumindest einer Art eines in einer Flüssigkeit enthaltenen biochemischen Moleküls aus einer Gruppe vorgegebener biochemischer Moleküle unterschiedlicher Art mit folgenden Schritten vorgesehen:
a) Bereitstellen eines Mittels zur Aufnahme der Flüssigkeit, wobei das Mittel mindestens eine Gegen- und eine Referenzelektrode sowie mehr als zwei Arbeitselektroden aufweist, wobei zum Nachweis jedes biochemischen Moleküls zumindest jeweils eine Arbeitselektrode (AE1, AE2, AE3) vorgesehen ist, die mit einem zum nachzuweisenden biochemischen Molekül komplementären Molekül beschichtet ist, so dass die biochemischen Moleküle unterschiedlicher Art simultan nachweisbar sind,
b) Inkontaktbringen der Flüssigkeit mit den Arbeits-, Gegen- und Referenzelektroden,
c) gleichzeitiges Anlegen eines vorgegebenen während der Messung veränderlichen Spannungsverlaufs zwischen den Arbeitselektroden und der Referenzelektrode und
d) Messen der durch die Arbeitselektroden fließenden Ströme, wobei während der Messung sämtliche Arbeitselektroden auf demselben Potenzial gehalten werden.

Die Messung erfolgt quasi zeitgleich bzw. simultan. Sie wird zweckmäßigerweise parallel oder mittels Multiplexen durchgeführt. Dabei kann die zwischen den Arbeitselektroden und der Referenzelektrode anliegende Spannung mit einem Potentiostaten geregelt werden. Das vorgeschlagene Verfahren ist relativ einfach durchführbar. Es ist universell und ermöglicht auch den simultanen Nachweis einer Vielzahl unterschiedlicher biochemischer Moleküle in einer Flüssigkeit.

Bei dem vorgegebenen Spannungsverlauf handelt es sich um einen während der Messung veränderlichen Spannungsverlauf. Der Spannungsverlauf kann mittels einer programmierbaren Spannungsquelle vorgegeben werden.

Die Elektroden können aus herkömmlichen Materialien, beispielsweise geeigneten Metallen wie Gold, Silber, Platin oder dgl. hergestellt sein. Es ist aber auch möglich, die Elektroden aus Kohlenstoff, insbesondere Grafit, herzustellen. Die Beschichtung der Elektroden erfolgt in herkömmlicher Weise, im Falle von Nukleinsäuren beispielsweise durch Ausbildung von kovalenten Bindungen. Es wird verwiesen auf MI Pividori, et al. (2000) Electrochemical genosensor design: Immobilisation of oligonucleotides onto transducer surfaces and detection methods. Biosensors and Bioelectronics 15, 291-303*.*

Ein Ausführungsbeispiel der Erfindung wird anhand der Zeichnung näher erläutert. Es zeigen:
- Fig. 1: ein schematisches Schaltbild und
- Fig. 2: ein mit der Schaltung gemäß Fig. 1 erzieltes Messergebnis.

Ein Mittel zur Aufnahme der die nachzuweisenden biochemischen Moleküle enthaltenden Flüssigkeit kann z.B. ein Behälter oder ein Feld auf einer aus einem isolierenden Material hergestellten Fläche, z.B. auf einem Chip, sein. Der Behälter weist Arbeitselektroden AE1, AE2, AE3, eine Gegenelektrode GE sowie eine Referenzelektrode RE auf. Die Elektroden sind z.B. aus Silber, Gold, Platin oder Grafit hergestellt. Die Arbeitselektroden AE1, AE2, AE3 sind mit zu den nachzuweisenden biochemischen Molekülen komplementären Moleküle beschichtet.

Jede der Arbeitselektroden AE1, AE2, AE3 ist über eine Strom-Spannungskonverter S1, S2, S3 mit einer Messvorrichtung AD verbunden.

Die Strom-Spannungskonverter S1, S2, S3 weisen jeweils einen Operationsverstärker OP1 auf, dessen nichtinvertierender Eingang (OP1+) an Schaltungsmasse anliegt. Infolgedessen werden sämtliche Arbeitselektroden AE1, AE2, AE3 auf demselben Potenzial gehalten. Der invertierende Eingang OP1- des ersten Operationsverstärkers OP1 ist mit der Arbeitselektrode AE1, AE2, AE3 und über einen ersten Widerstand R1 mit dem Ausgang verbunden, der wiederum mit der Messvorrichtung AD in Verbindung steht. Zur Rauschunterdrückung kann parallel zum ersten Widerstand R1 eine (hier nicht gezeigte) Kapazität geschaltet sein. Es können unterschiedlich große erste Widerstände R1 vorgesehen sein, welche alternativ einschaltbar sind. So kann auf einfache Weise der Messbereich geändert werden.

Mit dem Bezugszeichen P ist ein Potentiostat bezeichnet, dessen Eingang mit einer (hier nicht gezeigten) programmierbaren Spannungsquelle verbunden ist. Der Potentiostat P umfasst einen als Spannungsfolger geschalteten zweiten Operationsverstärker OP2 und einen dritten Operationsverstärker OP3. Der nichtinvertierende Eingang OP2+ des zweiten Operationsverstärkers OP2 ist an die Referenzelektrode RE angeschlossen. Der invertierende Eingang OP2- des zweiten Operationsverstärkers OP2 ist mit dessen Ausgang und über einen zweiten Widerstand mit dem invertierenden Eingang OP3- des dritten Operationsverstärkers OP3 verbunden. Der nichtinvertierende Eingang OP3+ des dritten Operationsverstärkers liegt an Schaltungsmasse. Die (hier nicht gezeigte) programmierbare Spannungsquelle ist über einen dritten Widerstand R3 mit dem invertierenden Eingang OP3- des dritten Operationsverstärkers OP3 sowie dem zweiten Widerstand OP2 verbunden. Der Ausgang des dritten Operationsverstärkers OP3 ist mit der Gegenelektrode GE verbunden. Zwischen dem Ausgang des dritten Operationsverstärkers OP3 und dessen invertierenden Eingang kann eine (hier nicht gezeigte) weitere Kapazität eingeschaltet sein.

Bei der Messvorrichtung AD kann es sich um einen Analog-Digital-Wandler mit Multiplexer handeln. Das ermöglicht eine quasi zeitgleiche Messung der durch die Arbeitselektroden AE1, AE2, AE3 fließenden Ströme.

Indem die Referenzelektrode RE an den nichtinvertierenden Eingang OP2+ des zweiten Operationsverstärkers OP2 angeschlossen ist, erhält man einen Spannungsfolger mit einer sehr hohen Eingangsimpedanz. Ein durch die Referenzelektrode RE fließender Elektrolysestrom wird damit wirkungsvoll unterbunden. Infolgedessen wird eine besonders genaue Messung erreicht.

Der mit der Gegenelektrode GE verbundene Ausgang des dritten Operationsverstärkers OP3 wird im Betrieb so angesteuert, dass zwischen dessen Eingängen OP3-, OP3+ keine Spannung anliegt. Der nichtinvertierende Eingang OP3+ des dritten Operationsverstärkers OP3 liegt an Schaltungsmasse an. Infolgedessen liegt auch der invertierende Eingang OP3- virtuell auf Masse und damit auf demselben Potenzial wie die Arbeitselektroden AE1, AE2, AE3. Bei geeigneter Regelung ist der durch den dritten Widerstand R3 fließende Strom gleich dem durch den zweiten Widerstand R2 fließenden Strom. Da die Spannung über dem zweiten Widerstand R2 dem Betrag nach gleich der Spannung zwischen der Referenzelektrode RE und den Arbeitselektroden AE1, AE2, AE3 ist, kann das Potenzial der Arbeitselektroden AE1, AE2, AE3 gegen die Referenzelektrode RE durch eine proportionale Spannung am Eingang U des Potentiostaten P vorgegeben werden. In der Praxis wird zweckmäßigerweise der zweite Widerstand R2 gleich dem dritten Widerstand R3 gewählt, wodurch die Proportionalitätskonstante auf den Wert -1 festgelegt wird. Alternativ kann in diesem Fall eines addierenden Potentiostaten P der dritte Widerstand R3 durch mehrere Widerstände ersetzt werden, wodurch mehrere Eingänge, z.B. zur Modulation, erhalten werden.

Nach einer Variation an der Schaltung ist es möglich, die Strom-Spannungskonverter S1, S2, S3 im Frequenzgang zu beschränken. Dadurch kann das Gesamtrauschen vermindert werden. Eine solche Beschränkung im Frequenzgang kann durch Kondensatoren erreicht werden, die jeweils parallel zum ersten Widerstand R1 geschaltet werden. Zur Vergrößerung des Strommessbereichs kann es von Vorteil sein, die ersten Widerstände R1, ggf. mit dazu parallel geschalteten Kondensatoren, mittels Relais oder analoger elektronischer Schalter oder einer Kombination der beiden schaltbar auszuführen.

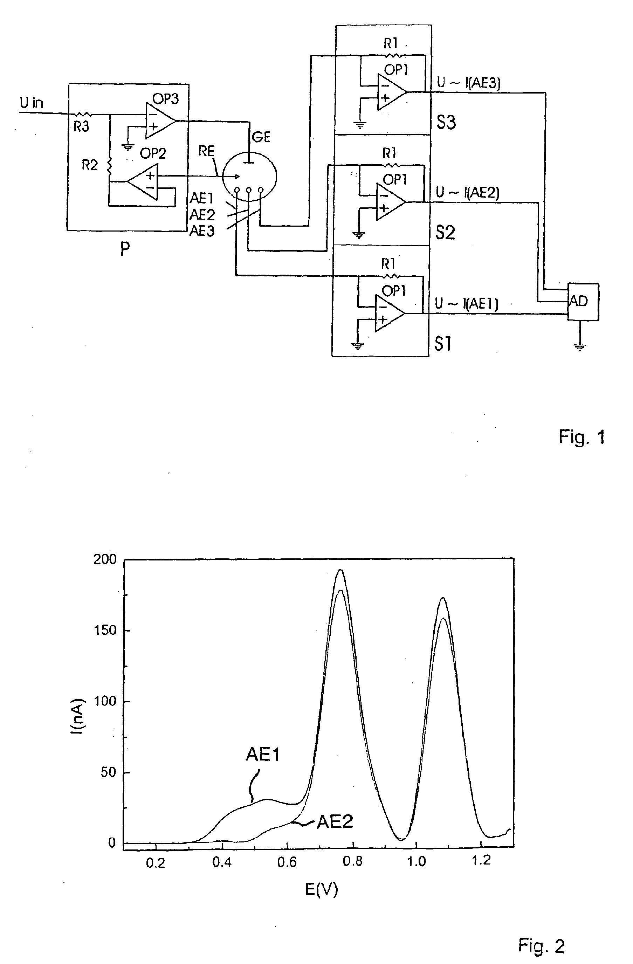

Fig. 2 zeigt das Ergebnis von mit der Schaltung durchgeführten Messungen. Dazu sind unbeschichtete Arbeitselektroden mit einer DNA enthaltenden Lösung in Kontakt gebracht worden. Die Messung ist erfolgt mittels Differenzialpulsvoltammetrie. Aufgetragen in Fig. 2 ist über der Spannung die an der Arbeitselektrode gemessene Stromdifferenz jeweils vor und nach einer Spannungsmodulation. Der linke Peak zeigt die Oxidation von Guanin von an der Arbeitselektrode adsorbierter DNA. Der rechte Peak zeigt die Oxidation von Adenin. Es sind die Ergebnisse aufgetragen welche durch Messung an einer ersten Arbeitselektrode AE1 und an einer zweiten Arbeitselektrode AE2 gewonnen worden sind.

Die vorliegende Messung zeigt lediglich einen unspezifischen Nachweis von DNA in einer Lösung. Bei einer geeigneten Beschichtung der Arbeitselektroden ist es im Rahmen der Erfindung möglich, spezifisch vorgegebene DNA oder dgl. in einer Lösung nachzuweisen. Die Anzahl der spezifisch nachzuweisenden DNA-Sequenzen oder dgl. hängt ab von der Anzahl der verwendeten Arbeitselektroden.

### Bezugszeichenliste

- OP1, 2, 3: erster, zweiter, dritter Operationsverstärker
- P: Potentiostat
- S1, 2, 3: erster, zweiter, dritter Strom-Spannungskonverter
- R1, 2, 3: erster, zweiter, dritter Widerstand
- AD: Messvorrichtung
- AE1, 2, 3: Arbeitselektroden
- GE: Gegenelektrode
- RE: Referenzelektrode
- U: Ausgang einer programmierbaren Spannungsquelle

## Patentansprüche

1. Vorrichtung zum elektrochemischen Nachweis zumindest einer Art- eines in einer Flüssigkeit enthaltenen biochemischen Moleküles aus einer Gruppe vorgegebener biochemischer Moleküle unterschiedlicher Art mit
einem mindestens eine Referenz- (RE) und mindestens eine Gegenelektrode (GE) sowie mehr als zwei Arbeitselektroden (AE1, AE2, AE3) aufweisenden Mittel (1) zur Aufnahme der Flüssigkeit, wobei zum Nachweis jeder Art eines biochemischen Moleküls zumindest jeweils eine Arbeitselektrode (AE1, AE2, AE3) vorgesehen ist, die mit einem zum nachzuweisenden biochemischen Molekül komplementären Molekül beschichtet ist, so dass biochemische Moleküle unterschiedlicher Art simultan nachweisbar sind,
einem Potentiostaten (P) zur Erzeugung eines vorgegebenen während der Messung veränderlichen Spannungsverlaufs zwischen den Arbeitselektroden (AE1, AE2, AE3) und der Referenzelektrode (RE),
wobei jeder der Arbeitselektroden (AE1, AE2, AE3) ein StromSpannungskonverter (S1, S2, S3) nachgeschaltet ist, wobei die Strom-Spannungskonverter (S1, S2, S3) sämtliche Arbeitselektroden (AE1, AE2, AE3) auf demselben Potenzial halten, und
einem Mittel (S1, S2, S3 AD) zum Messen der durch die Arbeitselektroden (AE1, AE2, AE3) fließenden Ströme.

2. Vorrichtung nach Anspruch 1, wobei mehrere miteinander verbundene oder kapazitiv gekoppelte Referenzelektroden (RE) vorgesehen sind.

3. Vorrichtung nach Anspruch 1 oder 2, wobei mehrere miteinander verbundene Gegenelektroden (GE) vorgesehen sind.

4. Vorrichtung nach einem der vorhergehenden Ansprüche, wobei das Mittel (AD) zum Messen einen Analog-Digital-Wandler aufweist.

5. Vorrichtung nach einem der vorhergehenden Ansprüche, wobei der Strom-Spannungskonverter (S1, S2, S3) ein einen ersten Operationsverstärker (OP1) aufweisenden Stromfolger ist, wobei ein nichtinvertierender Eingang (OP1+) des ersten Operationsverstärkers (OP1) an Masse anliegt und dessen invertierender Eingang (OP1-) über einen ersten Widerstand (R1) mit dem Ausgang des ersten Operationsverstärkers (OP1) und mit der Arbeitselektrode (AE1) verbunden ist.

6. Vorrichtung nach Anspruch 5, wobei parallel zum ersten Widerstand (R1) eine Kapazität geschaltet ist.

7. Vorrichtung nach einem der Ansprüche 5 oder 6, wobei zur Einstellung des Strommessbereichs unterschiedlich große erste Widerstände (R1) zwischen den invertierenden Eingang (OP1-) und den Ausgang des ersten Operationsverstärkers (OP1) einschaltbar sind.

8. Vorrichtung nach einem der vorhergehenden Ansprüche, wobei das nachzuweisende biochemische Molekül eine Nukleinsäure und die komplementären biochemischen Moleküle zur nachzuweisenden Nukleinsäure komplementäre Nukleinsäuren sind.

9. Vorrichtung nach einem der Ansprüche 5-7, wobei der Potentiostat (P) einen als Spannungsfolger geschalteten zweiten Operationsverstärker (OP2) aufweist, an dessen nichtinvertierendem Eingang (OP2+) die Referenzelektrode (RE) angeschlossen ist.

10. Vorrichtung nach Anspruch 9, wobei der Potentiostat (P) einen dritten Operationsverstärker (OP3) aufweist, an dessen Ausgang die Gegenelektrode (GE) angeschlossen ist, dessen invertierender Eingang (OP3-) über einen zweiten Widerstand (R2) mit dem Ausgang des zweiten Operationsverstärkers (OP2) verbunden und über einen dritten Widerstand (R3) an einer Einrichtung zur Erzeugung einer wählbaren Sollspannung angeschlossen ist, und wobei der nichtinvertierende Eingang (OP3+) des dritten Operationsverstärkers (OP3) an Masse anliegt.

11. Vorrichtung nach Anspruch 10, wobei zwischen dem Ausgang des dritten Operationsverstärkers (OP3) und dessen invertierenden Eingang (OP3-) eine Kapazität eingeschaltet ist.

12. Verfahren zum elektrochemischen Nachweis zumindest einer Art eines in einer Flüssigkeit enthaltenen biochemischen Moleküls aus einer Gruppe vorgegebener biochemischer Moleküle unterschiedlicher Art mit folgenden Schritten:
a) Bereitstellen eines Mittels (1) zur Aufnahme der Flüssigkeit, wobei das Mittel (1) mindestens eine Gegen- (GE) und eine Referenzelektrode (RE) sowie mehr als zwei Arbeitselektroden (AE1, AE2, AE3) aufweist, wobei zum Nachweis jedes biochemischen Moleküls zumindest jeweils eine Arbeitselektrode (AE1, AE2, AE3) vorgesehen ist, die mit einem zum nachzuweisenden biochemischen Molekül komplementären Molekül beschichtet ist, so dass biochemische Moleküle unterschiedlicher Art simultan nachweisbar sind,
b) Inkontaktbringen der Flüssigkeit mit den Arbeits- (AE1, AE2, AE3), Gegen- (GE) und Referenzelektroden (RE),
c) gleichzeitiges Anlegen eines vorgegebenen während der Messung veränderlichen Spannungsverlaufs zwischen den Arbeitselektroden (AE1, AE2, AE3) und der Referenzelektrode (RE) und
d) Messen der durch die Arbeitselektroden (AE1, AE2, AE3) fließenden Ströme, wobei während der Messung sämtliche Arbeitselektroden (AE1, AE2, AE3) auf demselben Potenzial gehalten werden.

13. Verfahren nach Anspruch 12, wobei das Messen parallel oder mittels Multiplexen durchgeführt wird.

14. Verfahren nach einem der Ansprüche 12 oder 13, wobei die zwischen den Arbeitselektroden (AE1, AE2, AE3) und der Referenzelektrode (RE) anliegende Spannung mit einem Potentiostaten (P) geregelt wird.

## Claims

1. A device for the electrochemical detection of at least one type of a biochemical molecule - contained in a liquid - from a group of predetermined biochemical molecules of different types, comprising
a means (1) for taking up the liquid, said means having at least one reference electrode (RE) and at least one counterelectrode (GE) and also more than two working electrodes (AE1, AE2, AE3), wherein in each case at least one working electrode (AE1, AE2, AE3) is provided for the detection of each type of a biochemical molecule, said at least one working electrode being coated with a molecule that is complementary to the biochemical molecule to be detected, so that biochemical molecules of different types can be detected simultaneously,
a potentiostat (P) for generating a predetermined voltage profile between the working electrodes (AE1, AE2, AE3) and the reference electrode (RE), which voltage profile is variable during the measurement,
a current/voltage converter (S1, S2, S3) being connected downstream of each of the working electrodes (AE1, AE2, AE3), the current/voltage converters (S1, S2, S3) maintaining all of the working electrodes (AE1, AE2, AE3) at the same potential, and
a means (S1, S2, S3, AD) for measuring the currents flowing through the working electrodes (AE1, AE2, AE3).

2. The device according to claim 1, wherein a plurality of interconnected or capacitively coupled reference electrodes (RE) are provided.

3. The device according to claim 1 or 2, wherein a plurality of interconnected counter electrodes (GE) are provided.

4. The device according to any of the preceding claims, wherein the measuring means (AD) has an analogue to digital converter.

5. The device according to any of the preceding claims, wherein the current/voltage converter (S1, S2, S3) is a current follower having a first operational amplifier (OP1), wherein a non-inverting input (OP1+) of the first operational amplifier (OP1) is grounded and the inverting input (OP1-) thereof is connected via a first resistor (R1) to the output of the first operational amplifier (OP1) and to the working electrode (AE1).

6. The device according to claim 5, wherein a capacitor is connected in parallel to the first resistor (R1).

7. The device according to claim 5 or 6, wherein it is possible to connect first resistors (R1) of different magnitudes in between the inverting input (OP1-) and the output of the first operational amplifier (OP1) for the purpose of setting the current measurement range.

8. The device according to any of the preceding claims, wherein the biochemical molecule to be detected is a nucleic acid and the complementary biochemical molecules are nucleic acids which are complementary to the nucleic acid to be detected.

9. The device according to any of claims 5 to 7, wherein the potentiostat (P) has a second operational amplifier (OP2) which is connected as a voltage follower and to whose non-inverting input (OP2+) the reference electrode (RE) is connected.

10. The device according to any of the preceding claims, wherein the potentiostat (P) has a third operational amplifier (OP3), to whose output the counterelectrode (GE) is connected and whose inverting input (OP3-) is connected via a second resistor (R2) to the output of the second operational amplifier (OP2) and is connected via a third resistor (R3) to a device for generating a selectable desired voltage, and wherein the non-inverting input (OP3+) of the third operational amplifier (OP3) is connected to ground.

11. The device according to claim 1, wherein a capacitor is connected in between the output of the third operational amplifier (OP3) and the inverting input (OP3-) thereof.

12. A method for the electrochemical detection of at least one type of a biochemical molecule, which molecule is contained in a liquid, from a group of predetermined biochemical molecules of different types, comprising the following steps:
a) providing a means (1) for taking up the liquid, the means (1) having at least one counterelectrode (GE) and a reference electrode (RE) as well as more than two working electrodes (AE1, AE2, AE3), wherein in each case at least one working electrode is provided for the detection of each biochemical molecule, said working electrode being coated with a molecule which is complementary to the biochemical molecule to be detected, so that biochemical molecules of different types can be detected simultaneously,
b) bringing the liquid in contact with the working (AE1, AE2, AE3), counter- (GE) and reference electrodes (RE),
c) simultaneously applying a predetermined voltage profile between the working electrodes (AE1, AE2, AE§) and the reference electrodes (RE), which voltage profile is variable during the measurement, and
d) measuring the currents flowing through the working electrodes (AE1, AE2, AE3), wherein all working electrodes (AE1, AE2, AE3) are maintained at the same potential during the measurement.

13. The method according to claim 12, wherein the measurement is carried out in parallel or by means of multiplexing.

14. The method according to claim 12 or 13, wherein the voltage present between the working electrodes (AE1, AE2, AE3) and the reference electrodes (RE) is regulated by a potentiostat (P).

## Revendications

1. Dispositif de détection électrochimique d'au moins un type de molécule biochimique contenue dans un liquide au sein d'un groupe de molécules biochimiques prédéfinies de types différents, comprenant :
un moyen (1) présentant au moins une électrode de référence (RE) et au moins une contre-électrode (GE) ainsi que plus de deux électrodes de travail (AE1, AE2, AE3) pour recevoir le liquide, dans lequel il est prévu pour détecter chaque type de molécule biochimique, respectivement, au moins une électrode de travail (AE1, AE2, AE3) qui est revêtue d'une molécule complémentaire de la molécule biochimique à détecter, de manière à pouvoir détecter simultanément des molécules biochimiques de types différents,
un potentiostat (P) pour générer un tracé de tension prédéfini variable au cours de la mesure entre les électrodes de travail (AE1, AE2, AE3) et l'électrode de référence (RE),
un convertisseur courant-tension (S1, S2, S3) étant connecté en aval de chacune des électrodes de travail (AE1, AE2, AE3), les convertisseurs courant-tension (S1, S2, S3) maintenant toutes les électrodes de travail (AE1, AE2, AE3) au même potentiel, et
un moyen (S1, S2, S3, AD) pour mesurer les courants traversant les électrodes de travail (AE1, AE2, AE3).

2. Dispositif selon la revendication 1, dans lequel on prévoit plusieurs électrodes de référence (RE) à connexion mutuelle ou à couplage capacitif.

3. Dispositif selon la revendication 1 ou 2, dans lequel on prévoit plusieurs contre-électrodes (GE) connectées l'une à l'autre.

4. Dispositif selon l'une quelconque des revendications précédentes, dans lequel le moyen de mesure (AD) présente un convertisseur analogique-numérique.

5. Dispositif selon l'une quelconque des revendications précédentes, dans lequel le convertisseur courant-tension (S1, S2, S3) est un suiveur de courant présentant un premier amplificateur opérationnel (OP1), dans lequel une entrée non inversante (OP 1 +) du premier amplificateur opérationnel (OP 1) est appliquée à la masse et son entrée inversante (OP1-) est connectée, via une première résistance (R1), à la sortie du premier amplificateur opérationnel (OP1) et à l'électrode de travail (AE1).

6. Dispositif selon la revendication 5, dans lequel on connecte une capacité en parallèle avec la première résistance (R1).

7. Dispositif selon l'une quelconque des revendications 5 ou 6, dans lequel on peut connecter des premières résistances (R1) de différentes tailles entre l'entrée inversante (OP1-) et la sortie du premier amplificateur opérationnel (OP1) pour régler la plage de mesure du courant.

8. Dispositif selon l'une quelconque des revendications précédentes, dans lequel la molécule biochimique à détecter est un acide nucléique et les molécules biochimiques complémentaires sont des acides nucléiques complémentaires de l'acide nucléique à détecter.

9. Dispositif selon l'une quelconque des revendications 5 à 7, dans lequel le potentiostat (P) présente un deuxième amplificateur opérationnel (OP2) connecté en suiveur de tension, à l'entrée non inversante (OP2+) duquel est connectée l'électrode de référence (RE).

10. Dispositif selon la revendication 9, dans lequel le potentiostat (P) présente un troisième amplificateur opérationnel (OP3), à la sortie duquel est connectée la contre-électrode (GE), dont l'entrée inversante (OP3-) est connectée, via une deuxième résistance (R2), à la sortie du deuxième amplificateur opérationnel (OP2) et connectée, via une troisième résistance (R3), à un dispositif générateur d'une tension nominale sélectionnable, et dans lequel l'entrée non inversante (OP3+) du troisième amplificateur opérationnel (OP3) est appliquée à la masse.

11. Dispositif selon la revendication 10, dans lequel on connecte une capacité entre la sortie du troisième amplificateur opérationnel (OP3) et son entrée inversante (OP3-).

12. Procédé de détection électrochimique d'au moins un type de molécule biochimique contenue dans un liquide au sein d'un groupe de molécules biochimiques prédéfinies de types différents, en suivant les étapes consistant à :
a) préparer un moyen (1) pour recevoir le liquide, lequel moyen (1) présente au moins une contre-électrode (GE) et une électrode de référence (RE) ainsi que plus de deux électrodes de travail (AE1, AE2, AE3), dans lequel il est prévu pour détecter chaque molécule biochimique au moins, respectivement, une électrode de travail (AE1, AE2, AE3) qui est revêtue d'une molécule complémentaire de la molécule biochimique à détecter de manière à pouvoir détecter simultanément des molécules biochimiques de types différents,
b) mettre en contact le liquide avec les électrodes de travail (AE1, AE2, AE3), les contre-électrodes (GE) et les électrodes de référence (RE),
c) appliquer simultanément un tracé de tension prédéfini variable au cours de la mesure entre les électrodes de travail (AE1, AE2, AE3) et l'électrode de référence (RE), et
d) mesurer les courants traversant les électrodes de travail (AE1, AE2, AE3), toutes les électrodes de travail (AE1, AE2, AE3) étant maintenues au même potentiel pendant la mesure.

13. Procédé selon la revendication 12, dans lequel la mesure est effectuée en parallèle ou par multiplexage.

14. Procédé selon l'une quelconque des revendications 12 ou 13, dans lequel on règle la tension appliquée entre les électrodes de travail (AE1, AE2, AE3) et l'électrode de référence (RE) avec un potentiostat (P).
